# EUROPÄISCHE PATENTSCHRIFT

(11) **EP 2 092 927 B1**
(45) Veröffentlichungstag und Bekanntmachung des Hinweises auf die Patenterteilung: **24.04.2013**
(21) Anmeldenummer: 08151912.6
(22) Anmeldetag: 25.02.2008
(51) Int. Cl.: A61J 7/00, B65B 5/10

(54) **Verfahren zum bedarfsgerechten Kommissionieren von Arzneimittelportionen in Abgabepackungen**
Method for ordering medicine portions in dispensing packs according to need
Procédé de commissionnement en fonction des besoins de portions de médicaments dans des emballages de distribution

(43) Veröffentlichungstag der Anmeldung: 26.08.2009
(73) Patentinhaber: Rowa Automatisierungssysteme GmbH, 53539 Kelberg (DE)
(72) Erfinder: Wagner, Rudolf M., 54550 Daun (DE)
(74) Vertreter: Zenz

(56) Entgegenhaltungen:
- DE-A1- 19 757 963
- DE-A1-102006 027 521
- FR-A- 2 753 370
- US-A1- 2004 253 083
- US-A1- 2007 084 150
- US-B1- 6 318 051

## Beschreibung

Die Erfindung betrifft ein Verfahren zum bedarfsgerechten Kommissionieren von Arzneimittelportionen in Abgabepackungen.

Arzneimittel werden an Patienten, medizinisches Personal oder Pfleger oder deren Betreuer grundsätzlich in zwei verschiedenen Arten von Packungen abgegeben. Einerseits gibt es Arzneimittelpackungen, die üblicherweise von Apotheken ausgegeben werden und die jeweils eine Mehrzahl gleichartiger Arzneimittelportionen enthalten, wie beispielsweise mehrere Tabletten, Kapseln oder Zäpfchen enthaltende Blister. Hier ist der Patient oder dessen Betreuer selbst für die richtige Entnahme und Dosierung einzelner Arzneimittelportionen aus den Arzneimittelpackungen verantwortlich. Regelmäßig erhält er dazu Hinweise von einem Apotheker. Eine zweite Form der Abgabe von Arzneimitteln wird hier als "Abgabepackung" bezeichnet. Die Abgabepackung enthält mehrere Aufnahmekammern, in denen jeweils eine oder mehrere Arzneimittelportionen eingefüllt sind, wobei jeder Aufnahmekammer eine Kennzeichnung, beispielsweise ein Einnahmezeitpunkt (Datum, Wochentag, Tageszeit), zugeordnet ist. Jede Aufnahmekammer kann mehrere unterschiedliche Arzneimittelportionen enthalten; es ist aber auch denkbar, dass für jede einzelne Arzneimittelportion genau eine Kammer vorgesehen ist, wobei beispielsweise mehrere Kammern demselben Einnahmezeitpunkt zugeordnet sind. Darüber hinaus können die Arzneimittelportionen auch so auf die Kammern aufgeteilt sein, dass jede Kammer nur gleichartige Arzneimittelportionen enthält. Auch können die in den Kammern enthaltenen Arzneimittelportionen selbst noch mit einer separaten Umverpackung umhüllt sein. Derartige Abgabepackungen haben beispielsweise die Form von Blistern, wobei die einzelnen Kammern zwischen zwei miteinander verbundenen (z.B. verschweißten) Folien gebildet sind. Die Abgabepackungen können aber auch aus einer Anordnung miteinander verbundener Becher oder Schächtelchen gebildet sein.

Derartige Abgabepackungen werden gegenwärtig häufig manuell befüllt, indem ein Bediener (beispielsweise das Personal in einer Apotheke, einem Krankenhaus oder einem Pflegeheim) zunächst eine Reihe herkömmlicher Arzneimittelpackungen, die jeweils mehrere Blisterverpackungen enthalten, zu einem Arbeitsplatz transportiert, dort zu befüllende Leer-Packungen für die Abgabepackungen mit jeweils mehreren Aufnahmekammern bereitstellt und dann aus den einzelnen Arzneimittelpackungen jeweils die erforderliche Anzahl von Arzneimittelportionen entnimmt und in die jeweils richtigen Aufnahmekammern der zu befüllenden Abgabepackungen einfüllt. Die einzelnen Arzneimittelportionen werden beispielsweise aus herkömmlichen Blisterverpackungen, von denen jeweils mehrere in einer herkömmlichen Arzneimittelverpackung enthalten sind, herausgedrückt, wobei sie dann direkt in die entsprechende Aufnahmekammer der Abgabepackung fallen. Anschließend werden zum Teil entleerte Blisterverpackungen wieder zurück in die herkömmlichen Arzneimittelpackungen eingepackt. Die teilweise gefüllte Blisterverpackungen enthaltenden Arzneimittelpackungen werden dann an einem Lagerort für eine spätere Entnahme weiterer Arzneimittelportionen gelagert. Die mit den Arzneimittelportionen befüllte Abgabepackung kann anschließend verschlossen werden. Bei diesen manuellen Herstellungsverfahren von Abgabepackungen können Fehler auftreten; beispielsweise können einzelne Arzneimittelportionen in die falschen Kammern eingefüllt werden oder es kann der Fall eintreten, dass eine zu hohe Anzahl von Arzneimittelportionen aus einer Arzneimittelpackung entnommen wird und die überschüssigen Arzneimittelportionen anschließend versehentlich nicht in diese Arzneimittelpackung zurück, sondern in eine andere, ebenfalls auf dem Arbeitsplatz bereitstehende Arzneimittelpackung mit einer anderen Art von Arzneimitteln zurückgefüllt wird.

Eine Aufgabe der Erfindung ist es daher, Bedienfehler zu minimieren.

Eine Lösung dieser Aufgabe könnte in einer Automatisierung des gesamten Vorgangs bestehen. Beispielsweise gibt es automatische Dispensiervorrichtungen, bei denen die Arzneimittelportionen, welche in die Abgabepackungen einzufüllen sind, vorab in speziellen Kassetten zur Verfügung gestellt werden, wobei die Kassetten mit einer großen Anzahl lose einliegender Arzneimittelportionen gefüllt sind und über eine spezielle integrierte Abgabeeinrichtung zur Abgabe einzelner Arzneimittelportionen verfügen. Eine Dispensiervorrichtung weist mehrere Kassettenaufnahmen auf, die jeweils eine Kassette mit einer vorgegebenen Art von Arzneimittelportionen aufnehmen können. Die Dispensiervorrichtung weist ferner eine Auslöseeinrichtung auf, die die Abgabeeinrichtung der in einer Kassettenaufnahme enthaltenen Kassette derart aktivieren kann, dass Arzneimittelportionen in einer vorgegebenen Anzahl aus der Kassette austreten. Die Dispensiervorrichtung sorgt dann für einen Transport der entnommenen Arzneimittelportionen in die richtigen Aufnahmekammern der Abgabepackung und für deren Verschluss. Gemäß der Patentschrift DE 10 2005 063 197 B4 kann beispielsweise eine derartige Dispensiervorrichtung mit einem Arzneimittel-Lagerautomaten kombiniert werden, der für eine Lagerung der Kassetten, deren Transport zu den Kassettenaufnahmen der Dispensiervorrichtung und deren Wechsel sorgt. Der hierzu verwendete Arzneimittel-Lagerautomat ist beispielsweise von einer Art, wie sie in der Patentschrift DE 195 09 951 C2 beschrieben ist. Diese bekannten Dispensiervorrichtungen haben den Nachteil, dass sie spezielle Kassetten mit integrierter Abgabeeinrichtung erfordern, in denen die Arzneimittelportionen lose gelagert sind. Eine Verwendung herkömmlicher Arzneimittelpackungen, welche beispielsweise mehrere Blisterverpakkungen enthalten, zur Abgabe von in Abgabepackungen einzufüllende Arzneimittelportionen ist nicht möglich.

Die US 6,318,051 B1 offenbart ein Verfahren zum bedarfsgerechten Kommissionieren von Arzneimittelportionen in Auffangschalen unter Verwendung eines automatisierten Lagers, in dem mehrere Lagerschächte, in welchen Blisterverpackungen gestapelt sind, gelagert werden,
wobei die Blisterverpackungen unterschiedlicher Abmessungen, die jeweils mehrere Arzneimittelportionen einer bestimmten Art in mehreren Aufnahmekammern enthalten, wobei die Aufnahmekammern bei den verschiedenen Blisterverpackungen unterschiedlich angeordnet sein können, identifiziert und in das automatisierte Lager eingelagert werden, wobei die einzelnen Blisterverpackungen identifizierende Daten in Zuordnung zu Kennzeichnungen ihrer jeweiligen Lagerorte gespeichert werden,
wobei wenigstens eine zu befüllende Auffangschale an einer automatischen Entnahmeeinheit bereitgestellt und bedarfsgerecht befüllt wird, indem für jede Art von in die Auffangschale einzufüllenden Arzneimittelportionen:
- die Entnahmeeinheit zum korrespondierenden Lagerschacht transportiert wird,
- von einer Vorrichtung zum Vereinzeln von Arzneimittelportionen wenigstens eine einzelne Arzneimittelportion aus der Blisterverpackung entnommen oder von ihr abgetrennt wird, wobei die Anzahl der in der Blisterverpackung verbleibenden Arzneimittelportionen ermittelt wird,
- die wenigstens eine entnommene oder abgetrennte Arzneimittelportion in wenigstens eine vorgegebene Aufnahmekammer der Auffangschale eingefüllt wird.

Auch die DE 10 2005 063 197 A1 betrifft ein Verfahren zum bedarfsgerechten Kommissionieren von Arzneimittel in Abgabepackungen unter Verwendung eines automatisierten Lagers bekannt, in dem Arzneimittelpackungen chaotisch unter optimaler Raumausnutzung auf Lagerflächen ebener Regalböden gelagert werden.

Aufgabe der Erfindung ist es, die eingangs genannten Fehler der manuellen Herstellung zu minimieren, ohne Dispensiervorrichtungen mit speziellen Kassetten für Arzneimittelportionen verwenden zu müssen.

Diese Aufgabe wird erfindungsgemäß durch ein Verfahren zum bedarfsgerechten Kommissionieren von Arzneimittelportionen in Abgabepackungen mit den Merkmalen des Anspruchs 1 gelöst.

Bei dem erfindungsgemäßen Verfahren zum bedarfsgerechten Kommissionieren von Arzneimittelportionen in Abgabepackungen unter Verwendung eines automatisierten Lagers, in dem eine Vielzahl unterschiedlicher Arzneimittelpackungen chaotisch unter optimaler Raumausnutzung auf Lagerflächen ebener Regalböden oder geneigter Schächte gelagert werden, wobei die Arzneimittelpackungen mit Hilfe wenigstens eines computergesteuerten Bediengeräts auf die Lagerflächen eingelagert oder von den Lagerflächen ausgelagert werden, werden zunächst in einem Schritt (a) Blisterverpackungen unterschiedlicher Abmessungen, die jeweils mehrere Arzneimittelportionen einer bestimmten Art in mehreren Aufnahmekammern enthalten, wobei die Aufnahmekammern bei den verschiedenen Blisterverpackungen unterschiedlich angeordnet sein können, identifiziert und in das automatisierte Lager eingelagert, so dass das automatisierte Lager neben den Arzneimittelpackungen auch einzelne Blisterverpackungen enthält. Dabei werden die einzelnen Blisterverpackungen identifizierende Daten in Zuordnung zu Kennzeichnungen ihrer jeweiligen Lagerorte gespeichert. Die einzulagernden Blisterverpackungen werden zuvor beispielsweise herkömmlichen Arzneimittelpackungen oder auch Großhandelspackungen entnommen, bevor sie identifiziert und in das automatisierte Lager eingelagert werden. Beim Schritt (a) des Einlagerns der Blisterverpackungen in das automatisierte Lager werden folgende Schritte ausgeführt: (a1) eine Arzneimittelpackung, die in einer Umverpackung wenigstens eine Blisterverpackung enthält, wird zu einer Umpackstation transportiert; (a2) die wenigstens eine Blisterverpackung wird aus der Umverpackung entnommen; (a3) identifizierende Informationen der Arzneimittelpackung werden als identifizierende Daten der wenigstens einen entnommenen Blisterverpackung übernommen und gespeichert; und (a4) die wenigstens eine Blisterverpackung wird in das automatisierte Lager eingelagert, wobei die als identifizierende Daten übernommenen identifizierenden Informationen den Kennzeichnungen der Lagerorte zugeordnet werden. In einem Schritt (b) wird wenigstens eine zu befüllende Abgabepackung (auch "Kundenbehälter" genannt) an einer automatischen Befüllstation bereitgestellt und bedarfsgerecht befüllt, indem für jede Art von in die Abgabepackung einzufüllenden Arzneimittelportionen folgende Schritte ausgeführt werden: (b1) eine diese Art enthaltende Blisterverpakkung wird mittels des Bediengeräts oder eines der Bediengeräte aus dem automatisierten Lager ausgelagert und zu der Befüllstation transportiert; (b2) von einer Vorrichtung zum Vereinzeln von Arzneimittelportionen wird wenigstens eine einzelne Arzneimittelportion aus der Blisterverpackung entnommen oder von ihr abgetrennt, wobei die Anzahl der in der Blisterverpackung verbleibenden Arzneimittelportionen ermittelt werden; (b3) die wenigstens eine entnommene oder abgetrennte Arzneimittelportion wird in wenigstens eine vorgegebene Aufnahmekammer der Abgabepackung eingefüllt; und (b4) die Blisterverpackung wird wieder in das automatisierte Lager eingelagert, sofern noch wenigstens eine vorgegebene Mindestanzahl von Arzneimittelportionen (diese ist vorzugsweise gleich Eins) in der Blisterverpackung verblieben ist. Anschließend wird in einem Schritt (c) die befüllte Abgabepackung in dasselbe oder ein anderes automatisiertes Lager eingelagert, sofern die Abgabepackung noch nicht ausgegeben werden soll (beispielsweise an einen Patienten, Kunden oder Arzt oder in ein nicht-automatisiertes Lager). Die Anzahl und die Anordnung der in der Blisterverpackung enthaltenen Arzneimittelportionen werden (i) beim Einlagern der Blisterverpakkungen im erstgenannten Schritt erfasst und in Zuordnung zu den identifizierenden Daten gespeichert oder (ii) nach dem Auslagern der Blisterverpackung im oben genannten Schritt (b1) und vor der Entnahme bzw. dem Abtrennen der wenigstens einen Arzneimittelportion im oben genannten Schritt (b2) erfasst. Dabei wird wenigstens eine Blisterverpackung in das automatisierte Lager eingelagert, indem die Blisterverpackung an einem Träger befestigt oder auf einen Träger aufgelegt wird, wobei der Träger so ausgebildet ist, dass ein Bediengerät den Träger mit der Blisterverpackung greifen und transportieren kann.

Aufgrund der erfindungsgemäßen Erfassung der Anzahl und Anordnung der in einer Blisterverpackung enthaltenen Arzneimittelportionen und deren Verfolgung über die Entnahmevorgänge hinweg ist es möglich, dass für die Herstellung der Abgabepakkungen ("Kundenbehälter") herkömmliche Blisterverpackungen aus herkömmlichen Arzneimittelpackungen verwendet werden. Diese Flexibilität führt dazu, dass das erfindungsgemäße Verfahren die bekannten Lagerprinzipien von Arzneimittellagerautomaten für eine Bereitstellung von Blisterverpackungen verwenden kann. Selbstverständlich sind die Lagerplätze und das Bediengerät ggf. an die Handhabung der Blisterverpackungen anzupassen.

Bei einer bevorzugten Ausführungsform des erfindungsgemäßen Verfahrens wird die Arzneimittelpackung im Schritt (a1) aus dem oder einem anderen automatisierten Lager ausgelagert und werden die identifizierenden Informationen aus einer Steuereinrichtung des automatisierten Lagers im Schritt (a3) automatisch übernommen. Dies hat den Vorteil, dass nach der Entnahme der Blisterverpackungen aus der Arzneimittelpackung keine Eingabe der die Arzneimittel identifizierenden Informationen erforderlich ist. In Abhängigkeit von den für die Arzneimittelpackung zur Verfügung stehenden Daten ist es sogar möglich, dass aus dem Speicher der Steuereinrichtung des automatisierten Lagers (Steuerungscomputer) auch Informationen über die Anzahl und Anordnung der in der Blisterverpackung enthaltenen Arzneimittelportionen entnommen werden. Sollten diese Informationen jedoch nicht zur Verfügung stehen, so sind diese ergänzend zu erfassen, beispielsweise die entnommene Blisterverpackung optisch zu erfassen bzw. zu vermessen.

Bei einer anderen bevorzugten Weiterbildung des erfindungsgemäßen Verfahrens wird die Arzneimittelpackung im Schritt (a1) aus demselben automatisierten Lager ausgelagert, in das im Schritt (a4) die vereinzelte Blisterverpackung eingelagert wird. Die Blisterverpackungen können dabei in denselben Lagerbereichen eingelagert werden, in denen auch die herkömmlichen Arzneimittelpackungen gelagert sind; es ist aber auch möglich, dass die Blisterverpackungen in speziell an die Lagerung derartiger Verpackungen angepasste Lagerbereiche eingelagert werden. Diese Lagerbereiche können beispielsweise flache ebene oder geneigte Fächer sein, aus denen die Blisterverpackungen beispielsweise nach vorn hinausragen, oder senkrechte Schlitze, in die die Blisterverpackungen eingestellt werden.

Bei einer Ausführungsform des Verfahrens wird die Blisterverpackung im Schritt (a2) manuell von einem Bediener aus der herantransportierten Arzneimittelpackung entnommen und werden die identifizierenden Informationen im Schritt (a3) durch Lesen eines Identifikationsmittels der Arzneimittelpackung übernommen. Als Identifikationsmittel dienen beispielsweise aufgedruckte Barcodes, Transponderchips (RFID) oder andere Mittel, die die identifizierende Information auslesbar mit der Packung verbinden. Die Übernahme kann beispielsweise durch ein Scannen des Barcodes oder eine Abfrage des RFID-Chips, also als automatische Datenübernahme, oder auch durch manuelle Übernahme, d. h. manuelle Eingabe der Daten, erfolgen. Die Daten können auch nach dem Scannen eines Barcodes beispielsweise von einer Datenbank, die mit der Steuereinrichtung gekoppelt ist, übernommen werden.

Beim erfindungsgemäßen Verfahrens werden die Blisterverpackungen in das automatisierte Lager eingelagert, indem sie jeweils an dem Träger befestigt oder auf den Träger aufgelegt werden, wobei der Träger so ausgebildet ist, dass ein Bediengerät den Träger mit der aufliegenden oder daran befestigten Blisterverpackung greifen und transportieren kann. Der Träger kann beispielsweise eine Klemme sein, die einerseits an der Blisterverpackung festgeklemmt wird und die andererseits Einrichtungen aufweist, die eine an die Art der Blisterverpackungen angepasste Lagerung und ein Eingreifen eines Bediengeräts gestatten. Beispielsweise kann der Träger so ausgebildet sein, dass die Blisterverpackung an einer Schiene mittels des Bediengeräts eingehängt und wieder entnommen werden kann. Bei dem Träger kann es sich aber auch um ein flaches Tablett handeln, auf das die Blisterverpackung einfach aufgelegt werden kann und das ebenfalls Einrichtungen (z.B. eine Stirnwand) zum Angreifen des Bediengeräts aufweist. Bei einer Weiterbildung dieser Ausführungsform des erfindungsgemäßen Verfahrens weist der Träger ein den Träger identifizierende Informationen enthaltendes Identifikationsmittel auf. Das Identifikationsmittel ist ein beliebiges Mittel, das mit dem Träger verbunden ist und auslesbare Informationen zur Verfügung stellen kann, beispielsweise ein Barcode oder ein Transponderchip. Das Identifikationsmittel des Trägers wird bei oder nach dem Befestigen oder Auflegen der Blisterverpackung gelesen und die den Träger identifizierenden Informationen werden (mittels Software) den die Blisterverpackung identifizierenden Informationen zugeordnet. Dabei kann derselbe Träger mehrfach für unterschiedliche Blisterverpackungen verwendet werden. Die Zuordnung der Identifikation des Trägers zur Identifikation der zugeordneten Blisterverpackung kann innerhalb des Speichers der Steuereinrichtung vorgenommen werden. Das Identifikationsmittel des Trägers kann auch entfallen. In diesem Fall kann auf der Blisterverpackung selbst ein gleichwertiges Identifikationsmittel vorgesehen sein. Es ist sogar denkbar, dass auf der Blisterverpackung in Zuordnung zu jeder Arzneimittelportion ein die Arzneimittelportion identifizierendes Identifikationsmittel aufgebracht ist, beispielsweise ein kleiner zweidimensionaler Barcode. Es ist auch eine Einlagerung denkbar, bei der die Identifizierungsinformationen nur rechnerintern dem Lagerort der Blisterverpackung zugeordnet werden, ohne dass die Blisterverpackung selbst oder der Träger Identifikationsmittel aufweisen; dies führt allerdings zum Identifikationsverlust bei Zerstörung der Speicherdaten. Es ist auch denkbar, dass die übernommenen, die Arzneimittelpackung identifizierenden Informationen bei oder nach dem Befestigen oder Auflegen der Blisterverpackung an bzw. auf den Träger auf ein Identifikationsmittel (Transponderchip beispielsweise) des Trägers übertragen werden.

Bei einer Ausführungsform umfassen die die Blisterverpakkungen identifizierenden Daten das in den Arzneimittelportionen enthaltene Arzneimittel identifizierende Daten und Haltbarkeitsdaten. Darüber hinaus können noch Informationen zur Art der Lagerung und weitere Informationen zugeordnet sein.

Bei einer bevorzugten Ausführungsform des erfindungsgemäßen Verfahrens wird die Anzahl der in der Blisterverpackung enthaltenen Arzneimittelportionen beim Einlagern der Blisterverpackung im Schritt (a) erfasst und in Zuordnung zu den identifizierenden Daten gespeichert, wobei diese gespeicherte Anzahl bei der Entnahme bzw. dem Abtrennen der wenigstens einen Arzneimittelportion im Schritt (b2) jeweils entsprechend inkrementiert wird. Zusätzlich ist es möglich, dass auch die Anordnung der in der Blisterverpackung enthaltenen Arzneimittelportionen beim Einlagern erfasst und gespeichert wird. Bei einer Ausführungsform werden die Anzahl und/oder Anordnung der in der Blisterverpackung enthaltenen Arzneimittelportionen nach dem Auslagern der Blisterverpackung im Schritt (b1) und vor der Entnahme bzw. dem Abtrennen der wenigstens einen Arzneimittelportion im Schritt (b2) erfasst, indem die ausgelagerte Blisterverpackung vermessen wird. Das Vermessen umfasst beispielsweise ein Wiegen und/oder ein optisches Abtasten (Scannen) der Abmessungen oder der aufgebrachten Identifikationsmittel. Die Anzahl und die Anordnung der in der Blisterverpackung enthaltenen Arzneimittelportionen müssen vor dem Schritt der Entnahme bzw. des Abtrennens der Arzneimittelportion zumindest insoweit bekannt sein, dass eine gezielte Entnahme/Abtrennung durch die Vereinzelungsvorrichtung möglich ist. Beispielsweise sind Ausführungsformen denkbar, bei denen die Anzahl bereits beim Einlagern der Blisterverpackungen in das automatische Lager erfasst und gespeichert wird und bei jeder Entnahme entsprechend inkrementiert wird, während die Anordnung der Arzneimittelportionen in der Blisterverpackung erst bei oder nach der Entnahme der Blisterverpackung aus dem Lager erfasst wird.

Die in die Abgabepackung einzufüllenden Arzneimittelportionen können sowohl aus der Blisterverpackung entnommen (beispielsweise herausgedrückt) als auch abgetrennt werden. Bei einer Ausführungsform werden die Arzneimittelportionen derart von der Blisterverpackung abgetrennt, dass sie von einem abgetrennten Blisterabschnitt umschlossen bleiben. Bei einer anderen, bevorzugten Ausführungsform werden die Arzneimittelportionen aus der Blisterverpackung jeweils entnommen, indem sie herausgedrückt werden, wobei die Arzneimittelportionen unmittelbar nach der Entnahme im Schritt (b3) in eine Aufnahmekammer der Abgabepackung eingefüllt werden. Vorzugsweise werden die Arzneimittelportionen derart herausgedrückt und direkt eingefüllt, dass sie dabei keine Teile der Vorrichtung zum Vereinzeln berühren. Dies verhindert eine Kontamination der Vorrichtungsteile durch Reste der verschiedenen Arzneimittelportionen.

Vorteilhafte und/oder bevorzugte Weiterbildungen der Erfindung sind in den Unteransprüchen gekennzeichnet. Im Folgenden wird die Erfindung anhand einer bevorzugten Ausführungsform des erfindungsgemäßen Verfahrens näher beschrieben.

Bei einer bevorzugten Ausführungsform des erfindungsgemäßen Verfahrens werden zunächst herkömmliche Arzneimittelpakkungen, von denen einige eine oder mehrere Blisterverpackungen enthalten, in einen Lagerautomaten eingelagert. Ein solcher Lagerautomat ist beispielsweise in der Patentschrift DE 195 09 951 C2 oder in der Anmeldungsveröffentlichung EP 1 762 511 A1 beschrieben. Für die Lagerung der herkömmlichen Arzneimittelpackungen kann sowohl ein Regalsystem mit ebenen Regalböden als auch ein Schachtsystem mit geneigten Lagerschächten oder eine Kombination von beidem verwendet werden. Die Arzneimittelpackungen werden chaotisch unter optimaler Raumausnutzung gelagert, wobei ein oder mehrere Bediengeräte und die Transportvorrichtungen für die Ein- und Auslagerung sorgen.

Erfindungsgemäß ist zunächst vorgesehen, zusätzlich zu den herkömmlichen Arzneimittelpackungen auch einzelne Blisterverpackungen in dem automatisierten Lager zu lagern. Dabei können die Blisterverpackungen beispielsweise ebenfalls auf ebenen Regalböden oder in geneigten Schächten gelagert werden, wobei das Bediengerät mit einer Greifeinrichtung zum Greifen derartiger Blisterverpackungen ausgestattet ist. Die einzelnen Blisterverpackungen können aber auch in einem speziellen Lagerbereich gelagert werden, der an deren Lagerung angepasst ist, beispielsweise schmale vertikale oder horizontale Fächer oder Vorrichtungen zum Aufhängen von an einem Träger befestigten Blisterverpackungen aufweist. Eine senkrecht hängende oder in einem Fach stehende Blisterverpackung könnte beispielsweise durch einen Backengreifer erfasst werden, eine liegende Blisterverpackung durch einen von oben auf den Blister einwirkenden Sauggreifer. Vorzugsweise sind die Blisterverpackungen mit speziellen Trägern versehen, die einen Zugriff des Bediengeräts erleichtern und eine einheitliche mechanische Schnittstelle für das Bediengerät zur Verfügung stellen.

Zur Einlagerung der Blisterverpackungen in das automatisierte Lager werden zunächst einzelne Arzneimittelpackungen aus dem automatisierten Lager in herkömmlicher Weise ausgelagert, d.h. von einem Bediengerät ergriffen, und zu einer Umpackstation transportiert. Selbstverständlich können auch Arzneimittelpackungen, die noch nicht in das automatisierte Lager eingelagert worden sind, an der Umpackstation manuell zur Verfügung gestellt werden. Aus diesen zur Umpackstation transportierten Arzneimittelpackungen entnimmt ein Benutzer die einzelnen Blister und übergibt sie einzeln einem Bediengerät oder einer Transporteinrichtung zur Wieder-Einlagerung in das automatisierte Lager. Bei diesem Vorgang werden die der zuvor ausgelagerten Arzneimittelpackung zugeordneten Identifizierungsinformationen (Arzneimittelidentifikation und Haltbarkeitsdaten beispielsweise) für die wieder einzulagernden Blisterverpackungen übernommen. Da die Steuereinrichtung nach dem Wieder-Einlagern der Blisterverpackungen weiß, an welchem Ort welche Blisterverpackung liegt, brauchen die Blisterverpackungen selbst keine Identifikationseinrichtung (beispielsweise Barcode oder RFID) aufzuweisen, da die identifizierenden Informationen einfach dem Lagerort zugeordnet sein können. Um jedoch die Sicherheit der Handhabung zu erhöhen, wird jeder Blisterverpackung ein Identifikationsmittel zugeordnet. Dabei ist es denkbar, dass die Blisterverpackungen von vornherein mit Identifikationsmitteln, wie beispielsweise einen Barcode, ausgestattet sind. Bei einer anderen Ausführungsform können Identifikationsmittel einem Träger zugeordnet sein, der mit der Blisterverpackung verbunden ist. Die Identifikation des Trägers wird dann rechnerintern der Identifikation der Blisterverpackung zugeordnet.

Wenn nunmehr ein Auftrag zum bedarfsgerechten Kommissionieren von Arzneimittelportionen in Abgabepackungen, d.h. ein Auftrag zur Herstellung von Abgabepackungen für Kunden eingeht, wird wie folgt vorgegangen. Zunächst wird festgestellt, ob sich die für die Abwicklung des Auftrags erforderlichen Blisterverpackungen im automatisierten Lager in vereinzelter Form oder innerhalb herkömmlicher Arzneimittelpackungen befinden. Sofern sie sich noch innerhalb herkömmlicher Arzneimittelpackungen befinden, werden diese zunächst nacheinander ausgelagert, wobei ein Bediener die Blisterverpackungen entnimmt und wieder in den Automaten einlagert, wie oben beschrieben wurde.

Dann werden von dem Lagerautomaten die für die Abgabepakkung benötigten einzelnen Blisterverpackungen automatisch ausgelagert und einer automatischen Entblisterungseinheit zur Verfügung gestellt. In dieser Einheit werden einzelne Arzneimittelportionen den Blisterverpackungen entnommen und direkt in vorgegebene Aufnahmekammern der Abgabepackung eingefüllt. Beispielsweise wird zunächst eine Blisterverpackung für eine erste Art von Arzneimittelportionen, beispielsweise eine erste Tablettenart, aus dem Automaten ausgelagert und zur Entblisterungseinheit transportiert. Diese entnimmt in der gewünschten Weise eine oder mehrere Tabletten, indem sie die Tabletten aus der Blisterverpackung herausdrückt, und füllt die entnommenen Tabletten in die vorgesehenen Aufnahmekammern ein. Wird beispielsweise eine Abgabeverpackung hergestellt, die für sieben Tage der Woche und jeweils 3 Einnahmezeiten (morgens, mittags und abends) jeweils eine Aufnahmekammer enthält (insgesamt 21 Kammern) und soll die erste Tablette jeweils am Morgen eingenommen, so drückt die Entblisterungseinheit nacheinander sieben Tabletten aus der Blisterverpackung heraus und sorgt für ein Einfüllen der Tabletten in die für die morgendliche Einnahme vorgesehenen Kammern. Sofern die Anzahl der in einer Blisterverpackung enthaltenen Arzneimittelportionen (oder der darin verbliebenen Arzneimittelportionen) nicht zum vollständigen Befüllen der Abgabepackung ausreicht, wird ggf. eine weitere gleichartige Blisterverpackung ausgelagert und zur Entblisterungseinheit transportiert. Wenn das Einfüllen der ersten Medikamentenart abgeschlossen ist, wird bei Bedarf eine Blisterverpackung mit einer zweiten Art eines Arzneimittels, beispielsweise eine Blisterverpackung mit mehreren Medikamentenkapseln, ausgelagert und zur Entblisterungseinheit transportiert. Dann werden in der gleichen Weise eine entsprechende Anzahl von Arzneimittelportionen (Kapseln) in die gewünschten Aufnahmekammern der Abgabepackung eingefüllt. Dieser Prozess wird automatisch so oft wiederholt, bis die gewünschten Arzneimittelportionen in der gewünschten Anzahl in den vorgesehenen Aufnahmekammern der Abgabepackung einliegen. Anschließend wird die Abgabepackung ggf. noch verschlossen, beispielsweise werden die Aufnahmekammern zwischen zwei Folien eingeschlossen.

Die auf diese Weise befüllte Abgabepackung kann anschließend ausgegeben werden (beispielsweise an einen Kunden oder an ein nicht-automatisiertes Lager) oder auch wieder in das automatisierte Lager eingelagert werden, sofern sie noch nicht benötigt wird. Auf diese Weise können Aufträge vorab kommissioniert werden und dann zu einem späteren Zeitpunkt aus dem _{A}u-tomaten ausgelagert werden.

## Patentansprüche

1. Verfahren zum bedarfsgerechten Kommissionieren von Arzneimittelportionen in Abgabepackungen unter Verwendung eines automatisierten Lagers, in dem eine Vielzahl unterschiedlicher Arzneimittelpackungen chaotisch unter optimaler Raumausnutzung auf Lagerflächen ebener Regalböden oder geneigter Schächte gelagert werden, wobei die Arzneimittelpackungen mit Hilfe wenigstens eines computergesteuerten Bediengeräts auf die Lagerflächen eingelagert oder von den Lagerflächen ausgelagert werden, wobei:
(a) Blisterverpackungen unterschiedlicher Abmessungen, die jeweils mehrere Arzneimittelportionen einer bestimmten Art in mehreren Aufnahmekammern enthalten, wobei die Aufnahmekammern bei den verschiedenen Blisterverpackungen unterschiedlich angeordnet sein können, identifiziert und in das automatisierte Lager eingelagert werden, so dass das automatisierte Lager neben den Arzneimittelpackungen auch einzelne Blisterverpackungen enthält, wobei die einzelnen Blisterverpackungen identifizierende Daten in Zuordnung zu Kennzeichnungen ihrer jeweiligen Lagerorte gespeichert werden, wobei
(a1) eine Arzneimittelpackung, die in einer Umverpackung wenigstens eine Blisterverpackung enthält, zu einer Umpackstation transportiert wird,
(a2) die wenigstens eine Blisterverpackung aus der Umverpackung entnommen wird,
(a3) identifizierende Informationen der Arzneimittelpackung als identifizierende Daten der wenigstens einen entnommenen Blisterverpackung übernommen und gespeichert werden,
(a4) die wenigstens eine Blisterverpackung in das automatisierte Lager eingelagert wird, wobei die als identifizierende Daten übernommenen identifizierenden Informationen den Kennzeichnungen der Lagerorte zugeordnet werden,
(b) wenigstens eine zu befüllende Abgabepackung an einer automatischen Befüllstation bereitgestellt und bedarfsgerecht befüllt wird, indem für jede Art von in die Abgabepackung einzufüllenden Arzneimittelportionen:
(b1) eine diese Art enthaltende Blisterverpackung mittels des Bediengeräts oder eines der Bediengeräte aus dem automatisierten Lager ausgelagert und zu der Befüllstation transportiert wird,
(b2) von einer Vorrichtung zum Vereinzeln von Arzneimittelportionen wenigstens eine einzelne Arzneimittelportion aus der Blisterverpackung entnommen oder von ihr abgetrennt wird, wobei die Anzahl der in der Blisterverpackung verbleibenden Arzneimittelportionen ermittelt wird,
(b3) die wenigstens eine entnommene oder abgetrennte Arzneimittelportion in wenigstens eine vorgegebene Aufnahmekammer der Abgabepackung eingefüllt wird,
(b4) die Blisterverpackung wieder in das automatisierte Lager eingelagert wird, sofern noch wenigstens eine vorgegebene Mindestanzahl von Arzneimittelportionen in der Blisterverpackung verblieben ist,
(c) die befüllte Abgabepackung in dasselbe oder ein anderes automatisiertes Lager eingelagert wird, sofern die Abgabepackung noch nicht ausgegeben werden soll;
wobei die Anzahl und Anordnung der in der Blisterverpackung enthaltenen Arzneimittelportionen (i) beim Einlagern der Blisterverpackung im Schritt (a) erfasst und in Zuordnung zu den identifizierenden Daten gespeichert wird und/oder (ii) nach dem Auslagern der Blisterverpackung im Schritt (b1) und vor der Entnahme bzw. dem Abtrennen der wenigstens einen Arzneimittelportion im Schritt (b2) erfasst wird,
wobei wenigstens eine Blisterverpackung in das automatisierte Lager eingelagert wird, indem die Blisterverpackung an einem Träger befestigt oder auf einen Träger aufgelegt wird, wobei der Träger so ausgebildet ist, dass ein Bediengerät den Träger mit der Blisterverpackung greifen und transportieren kann.

2. Verfahren nach Anspruch 1, **dadurch gekennzeichnet, dass** die Arzneimittelpackung im Schritt (a1) aus dem oder einem anderen automatisierten Lager ausgelagert wird und die identifizierenden Informationen aus einer Steuereinrichtung des automatisierten Lagers im Schritt (a3) automatisch übernommen werden.

3. Verfahren nach Anspruch 2, **dadurch gekennzeichnet, dass** die Arzneimittelpackung im Schritt (a1) aus demselben automatisierten Lager ausgelagert wird, in das im Schritt (a4) die Blisterverpackung eingelagert wird, wobei die Blisterverpackungen in gleichartigen Lagerbereichen oder in speziell an die Lagerung von Blisterverpackungen angepassten Lagerbereichen eingelagert werden.

4. Verfahren nach einem der Ansprüche 1 - 3, **dadurch gekennzeichnet,**
**dass** die Blisterverpackung im Schritt (a2) manuell von einem Bediener entnommen wird und
**dass** die identifizierenden Informationen im Schritt (a3) durch Lesen eines Identifikationsmittels der Arzneimittelpackung übernommen werden.

5. Verfahren nach Anspruch 4, **dadurch gekennzeichnet, dass** das Identifikationsmittel ein Barcode der Arzneimittelpackung ist, so dass die identifizierenden Informationen im Schritt (a3) durch Lesen des Barcodes übernommen werden.

6. Verfahren nach einem der Ansprüche 1-5, **dadurch gekennzeichnet, dass** der Träger ein den Träger identifizierende Informationen enthaltendes Identifikationsmittel aufweist, wobei das Identifikationsmittel des Trägers bei oder nach dem Befestigen oder Auflegen der Blisterverpackung gelesen wird und die den Träger identifizierenden Informationen den die Blisterverpackung identifizierenden Informationen zugeordnet werden.

7. Verfahren nach einem der Ansprüche 1-5, **dadurch gekennzeichnet, dass** die übernommenen, die Arzneimittelpackung identifizierenden Informationen bei oder nach dem Befestigen oder Auflegen der Blisterverpackung auf ein Identifikationsmittel des Trägers übertragen werden.

8. Verfahren nach einem der Ansprüche 1 - 7, **dadurch gekennzeichnet, dass** die die Blisterverpackungen identifizierenden Daten das in den Arzneimittelportionen enthaltene Arzneimittel identifizierende Daten und Haltbarkeitsdaten umfassen.

9. Verfahren nach einem der Ansprüche 1 - 8, **dadurch gekennzeichnet, dass** die Anzahl der in der Blisterverpackung enthaltenen Arzneimittelportionen beim Einlagern der Blisterverpackung im Schritt (a) erfasst und in Zuordnung zu den identifizierenden Daten gespeichert wird, wobei diese gespeicherte Anzahl bei der Entnahme bzw. dem Abtrennen der wenigstens einen Arzneimittelportion im Schritt (b2) jeweils entsprechend inkrementiert wird.

10. Verfahren nach einem der Ansprüche 1 - 9, **dadurch gekennzeichnet, dass** die Anzahl und/oder Anordnung der in der Blisterverpackung enthaltenen Arzneimittelportionen nach dem Auslagern der Blisterverpackung im Schritt (b1) und vor der Entnahme bzw. dem Abtrennen der wenigstens einen Arzneimittelportion im Schritt (b2) erfasst werden, indem die ausgelagerte Blisterverpackung vermessen wird.

11. Verfahren nach einem der Ansprüche 1 - 10, **dadurch gekennzeichnet, dass** die wenigstens eine Arzneimittelportion im Schritt (b2) von der Blisterverpackung abgetrennt wird, so dass sie von einem abgetrennten Blisterabschnitt umschlossen bleibt.

12. Verfahren nach einem der Ansprüche 1 - 10, **dadurch gekennzeichnet, dass** die wenigstens eine Arzneimittelportion im Schritt (b2) aus der Blisterverpackung entnommen wird, indem sie herausgedrückt wird, und dass die Arzneimittelportion unmittelbar nach der Entnahme im Schritt (b3) in eine Aufnahmekammer der Abgabepackung eingefüllt wird.

13. Verfahren nach Anspruch 12, **dadurch gekennzeichnet, dass** die Arzneimittelportion derart herausgedrückt und direkt eingefüllt wird, dass sie keine Teile der Vorrichtung zum Vereinzeln berührt.

## Claims

1. Method for the need-based packing of medication dosages in dispensing packs using an automated storage facility in which a plurality of different medication packs are stored chaotically with optimal utilisation of space on the storage surfaces of level shelves or of slanted chutes, wherein the medication packs are loaded onto or removed from the storage surfaces by means of at least one computer-controlled operator device, wherein:
(a) blister packs of various dimensions, each containing a plurality of medication dosages of a certain type in a plurality of reception chambers, wherein the reception chambers can be arranged differently in the various blister packs, are identified and loaded into the automated storage facility in such a way that the automated storage facility also contains individual blister packs in addition to the medication packs, wherein the data identifying the individual blister packs are saved allocated to the identifications of their respective storage sites, wherein
(a1) a medication pack containing at least one blister pack in an outer packaging is transported to a repackaging station;
(a2) the at least one blister pack is removed from the outer packaging;
(a3) identifying information of the medication pack is copied and saved as identifying data of the at least one removed blister pack;
(a4) the at least one blister pack is loaded into the automated storage facility, wherein the information copied as identifying data is allocated to the identifications of the storage sites;
(b) at least one dispensing pack to be filled is provided at an automated filling station and filled as required, in which case for each type of medication dosage to be filled into the dispensing packs:
(b1) a blister pack containing this type is removed from the automated storage facility by means of the operator device or of one of the operator devices and transported to the filling station;
(b2) at least one individual medication dosage is removed from the blister pack or separated therefrom by an apparatus for the separation of medication dosages, wherein the number of medication dosages remaining in the blister pack is established;
(b3) the at least one removed or separated medication dosage is filled into at least one predetermined reception chamber of the dispensing pack;
(b4) the blister pack is reloaded into the automated storage facility if at least a predetermined minimum number of medication dosages remains in the blister pack;
(c) the filled dispensing pack is loaded into the same or into a different automated storage facility if the dispensing pack is not to be released yet; wherein the number and arrangement of the medication dosages contained in the blister pack (i) is detected as the blister pack is being loaded into storage in step (a) and is saved allocated to the identifying data and/or (ii) is detected after the removal from storage of the blister pack in step (b1) and prior to the removal or separation of the at least one medication dosage in step (b2);
wherein at least one blister pack is loaded into the automated storage facility by attaching the blister pack to a carrier or placing it upon a carrier, wherein the carrier is formed in such a way that an operator device can grip and transport the carrier having the blister pack.

2. Method according to claim 1, **characterised in that** the medication pack is removed in step (a1) from the storage facility or from a different automated storage facility and the identifying information is automatically copied from a control mechanism of the automated storage facility in step (a3).

3. Method according to claim 2, **characterised in that** in step (a1) the medication pack is removed from the same automated storage facility into which the blister pack is loaded in step (a4), the blister packs being loaded into storage regions of the same type or into storage regions specially adapted to the storage of blister packs.

4. Method according to any of claims 1 to 3, **characterised in that** in step (a2) the blister pack is removed manually by an operator, and **in that** in step (a3) the identifying information is copied by reading an identification means of the medication pack.

5. Method according to claim 4, **characterised in that** the identification means is a barcode of the medication pack, such that in step (a3) the identifying information is copied by reading the barcode.

6. Method according to any of claims 1 to 5, **characterised in that** the carrier has an identification means containing information identifying the carrier, the identification means of the carrier being read during or after the attachment or placement of the blister pack and the information identifying the carrier being allocated to the information identifying the blister pack.

7. Method according to any of claims 1 to 5, **characterised in that** the copied information identifying the medication pack is transferred to an identification means of the carrier during or after the attachment or placement of the blister pack.

8. Method according to any of claims 1 to 7, **characterised in that** the data identifying the blister packs comprise dates and use-by dates identifying the medication contained in the medication dosages.

9. Method according to any of claims 1 to 8, **characterised in that** the number of medication dosages contained in the blister pack is/are detected as the blister pack is being loaded into storage in step (a) and saved allocated to the identifying data, this saved number in each case being incremented appropriately during the removal or separation of the at least one medication dosage in step (b2).

10. Method according to any of claims 1 to 9, **characterised in that** the number and/or arrangement of the medication dosages contained in the blister pack are detected after the removal from storage of the blister pack in step (b1) and prior to the removal or separation of the at least one medication dosage in step (b2) by measuring the blister pack removed from storage.

11. Method according to any of claims 1 to 10, **characterised in that** the at least one medication dosage is separated from the blister pack in step (b2) so as to remain enclosed by a separate blister portion.

12. Method according to any of claims 1 to 10, **characterised in that** the at least one medication dosage is removed from the blister pack in step (b2) by squeezing it out, and **in that** the medication dosage is filled into a reception chamber of the dispensing pack immediately after its removal in step (b3).

13. Method according to claim 12, **characterised in that** the medication dosage is squeezed out and directly filled in such a way as to not contact any parts of the separation apparatus.

## Revendications

1. Procédé de commissionnement en fonction des besoins de portions de médicaments dans des emballages de distribution en utilisant un magasin automatisé, dans lequel une pluralité d'emballages de médicaments différents sont stockés de manière chaotique avec une exploitation optimale de l'espace sur des surfaces du magasin de rayonnages plans ou dans des puits inclinés, dans lequel les emballages de médicaments sont stockés à l'aide d'au moins un appareil de service commandé par ordinateur sur les surfaces du magasin ou sont extraits des surfaces du magasin, dans lequel :
(a) des emballages sous blister de différentes dimensions, qui contiennent respectivement plusieurs portions de médicaments d'un certain type dans plusieurs chambres réceptrices, dans lequel les chambres réceptrices peuvent être aménagées différemment dans les divers emballages sous blister, identifiées et stockées dans le magasin automatisé de sorte que le magasin automatisé contienne, à côté des emballages de médicaments, également des emballages sous blister, dans lequel les données identifiant des emballages sous blister individuels sont mémorisées en fonction de marquages de leurs emplacements respectifs dans le magasin, dans lequel :
(a1) un emballage de médicament, qui contient dans un suremballage au moins un emballage sous blister est transporté à un poste de ré-emballage,
(a2) le au moins un emballage sous blister est retiré du suremballage,
(a3) des informations identifiantes de l'emballage de médicament sont prises en charge et mémorisées comme données identifiantes du au moins un emballage sous blister retiré,
(a4) le au moins un emballage sous blister est stocké dans le magasin automatisé, dans lequel les informations identifiantes prises en charge comme données identifiantes sont affectées aux marquages des emplacements dans le magasin,
(b) au moins un emballage de distribution à remplir est préparé dans un poste de remplissage automatique où il est rempli en fonction des besoins en faisant en sorte que, pour chaque type de portions de médicaments à insérer dans l'emballage de distribution :
(b1) un emballage sous blister contenant ce type soit extrait du magasin automatisé au moyen de l'appareil de service ou d'un des appareils de service et soit transporté au poste de remplissage,
(b2) au moins une portion de médicament individuelle soit retirée de l'emballage sous blister par un dispositif d'isolement de portions de médicaments ou en soit séparée en déterminant le nombre des portions de médicaments subsistant dans l'emballage sous blister,
(b3) la au moins une portion de médicament retirée ou séparée soit insérée dans au moins une chambre réceptrice prédéterminée de l'emballage de distribution,
(b4) l'emballage sous blister soit à nouveau stocké dans le magasin automatisé pour autant qu'il reste encore au moins un nombre minimal prédéterminé de portions de médicaments dans l'emballage sous blister,
(c) l'emballage de distribution rempli est stocké dans le même magasin automatisé ou dans un autre magasin automatisé pour autant que l'emballage de distribution ne doive pas encore être délivré ;
dans lequel le nombre et l'aménagement des portions de médicaments contenues dans l'emballage sous blister (i) sont saisis lors du stockage de l'emballage sous blister à l'étape (a) et sont mémorisés en fonction des données identifiantes et/ou (ii) sont saisis après l'extraction de l'emballage sous blister à l'étape (b1) et avant le retrait ou la séparation de la au moins une portion de médicament à l'étape (b2),
dans lequel au moins un emballage sous blister est stocké dans le magasin automatisé en fixant l'emballage sous blister à un support ou en le déposant sur un support, dans lequel le support est conformé de sorte qu'un appareil de service puisse saisir et transporter le support avec l'emballage sous blister.

2. Procédé selon la revendication 1, **caractérisé en ce que** l'emballage de médicament est extrait à l'étape (a1) du magasin ou d'un autre magasin automatisé et les informations identifiantes sont prises en charge automatiquement à partir d'un dispositif de commande du magasin automatisé à l'étape (a3).

3. Procédé selon la revendication 2, **caractérisé en ce que** l'emballage de médicament est extrait à l'étape (a1) du même magasin automatisé, dans lequel l'emballage sous blister est inséré à l'étape (a4), dans lequel les emballages sous blister sont stockés dans des emplacements similaires du magasin ou dans des emplacements du magasin particulièrement adaptés au stockage d'emballages sous blister.

4. Procédé selon l'une quelconque des revendications 1 à 3, **caractérisé en ce que** :
l'emballage sous blister est retiré manuellement par un employé à l'étape (a2), et
les informations identifiantes sont prises en charge à l'étape (a3) par lecture d'un moyen d'identification de l'emballage de médicament.

5. Procédé selon la revendication 4, **caractérisé en ce que** le moyen d'identification est un code à barres de l'emballage de médicament de sorte que les informations identifiantes soient prises en charge à l'étape (a3) par lecture du code à barres.

6. Procédé selon l'une quelconque des revendications 1 à 5, **caractérisé en ce que** le support présente un moyen d'identification contenant des informations identifiant le support, dans lequel le moyen d'identification du support est lu lors de la fixation ou du dépôt de l'emballage sous blister ou après ces derniers et les informations identifiant le support sont affectées aux informations identifiant l'emballage sous blister.

7. Procédé selon l'une quelconque des revendications 1 à 5, **caractérisé en ce que** les informations prises en charge identifiant l'emballage de médicament sont transférées à un moyen d'identification du support lors de la fixation ou du dépôt, ou après ceux-ci, de l'emballage sous blister sur un moyen d'identification du support.

8. Procédé selon l'une quelconque des revendications 1 à 7, **caractérisé en ce que** les données identifiant les emballages sous blister comprennent les données identifiant les médicaments contenus dans les portions de médicaments et les données de durabilité.

9. Procédé selon l'une quelconque des revendications 1 à 8, **caractérisé en ce que** le nombre des portions de médicaments contenues dans l'emballage sous blister est saisi lors du stockage de l'emballage sous blister à l'étape (a) et est mémorisé en fonction des données identifiantes, dans lequel ce nombre mémorisé est incrémenté de manière respectivement correspondante lors du retrait ou de la séparation de la au moins une portion de médicament à l'étape (b2).

10. Procédé selon l'une quelconque des revendications 1 à 9, **caractérisé en ce que** le nombre et/ou l'aménagement des portions de médicaments contenues dans l'emballage sous blister sont saisis après l'extraction de l'emballage sous blister à l'étape (b1) et avant le retrait ou la séparation de la au moins une portion de médicament à l'étape (b2), en mesurant l'emballage sous blister extrait.

11. Procédé selon l'une quelconque des revendications 1 à 10, **caractérisé en ce que** la au moins une portion de médicament est séparée à l'étape (b2) de l'emballage sous blister de sorte qu'elle reste entourée d'une section de blister séparée.

12. Procédé selon l'une quelconque des revendications 1 à 10, **caractérisé en ce que** la au moins une portion de médicament est retirée à l'étape (b2) de l'emballage sous blister, en la pressant à l'extérieur et la portion de médicament est directement introduite dans une chambre réceptrice de l'emballage de distribution après le retrait à l'étape (b3).

13. Procédé selon la revendication 12, **caractérisé en ce que** la portion de médicament est pressée à l'extérieur et insérée directement de sorte qu'elle ne vienne pas en contact avec des parties quelconques du dispositif d'isolement.
